# EUROPEAN PATENT APPLICATION

(11) **EP 0 975 184 A1**
(43) Date of publication of application: **26.01.2000**
(21) Application number: 98401838.2
(22) Date of filing: 20.07.1998
(51) Int. Cl.: H04Q 7/36, H04B 7/26

(54) **Method of allocating resources and allocation scheme therefor**

(71) Applicant: MOTOROLA, INC., Schaumburg, IL 60196 (US)
(72) Inventor: Johnson, Christopher Philip, 75014 Paris (FR); Boscovic, Dragan, 78100 St. Germain-en-Laye (FR); Benamar, Abdelkrim, 75000 Paris (FR)
(74) Representative: Joly, Jean-Jacques

(57) **Abstract**

The invention relates to a method for allocating resources to a terminal (108) in a communications system. The system is arranged to support a first duplexing scheme and a second duplexing scheme. One of the first or second duplexing schemes is allocated to the terminal (108) in response to at least one criteria relating to the spectral use of the system so as to optimise the spectral efficient use of the system by the terminal (108).

## Description

### Field of the Invention

The present invention relates to a method of allocating resources, for example, from a first and a second duplexing scheme in a Universal Mobile Telecommunications System (UMTS).

### Background of the Invention

Cellular telecommunications systems can provide a service which has the ability to transmit telecommunications traffic between a telecommunications infrastructure and a mobile terminal in both directions; this type of service is known as a duplex service. Two schemes for providing the duplex service are Time Division Duplex (TDD) and Frequency Division Duplex (FDD). The TDD scheme comprise a band of frequencies allocated to the TDD scheme, and from the allocated bend of frequencies, a single frequency is allocated to a given mobile terminal for both uplink and downlink communications. The FDD scheme comprises an uplink band of frequencies and a downlink band of frequencies allocated to the FDD scheme. From the uplink band of frequencies, a single frequency is allocated to a given mobile terminal for uplink communications only, and from the downlink band of frequencies, a single frequency is allocated to the given mobile terminal for downlink communications only.

The extent to which the full duplex service is used depends upon whether the telecommunications traffic is balanced or unbalanced. An example of balanced telecommunications traffic is voice traffic, where approximately the same amount of data is transmitted in both directions. Unbalanced telecommunications traffic is characterised by more data being transmitted in one direction than another, and is a typical characteristic of certain telecommunications applications, for example, information downloading.

It has been proposed that UMTS will support both TDD and FDD. An arbitrary choice of duplexing scheme for allocation (which is predetermined) to a given telecommunications application will result in an inefficient use of resources.

It is therefore an object of the present invention to obviate, or at least mitigate the problem of poor system resource allocation.

### Summary of the Invention

According to the present invention, there is prodded a method for allocating resources to a terminal in a communications system, the system arranged to support a first duplexing scheme and a second duplexing scheme, the method comprising the steps of: allocating one of the first or second duplexing schemes to the terminal in response to at least one criteria relating to the spectral use of the system so as to optimise the spectral efficient use of the system by the terminal.

According to the present invention, there is also provided a frequency allocation scheme comprising a first band of frequencies and a second band of frequencies, the first band of frequencies corresponding to at least a first link of a first duplexing scheme, wherein a portion of the second band of frequencies is dynamically allocated for use by the at least the first link.

Other, preferred, features and advantages are set forth and will become apparent from the accompanying description and dependent Claims 2 to 18 and 20 to 22.

### Brief Description of the Drawings

At least one example of the invention will now be described, with reference to the accompanying drawings, in which:

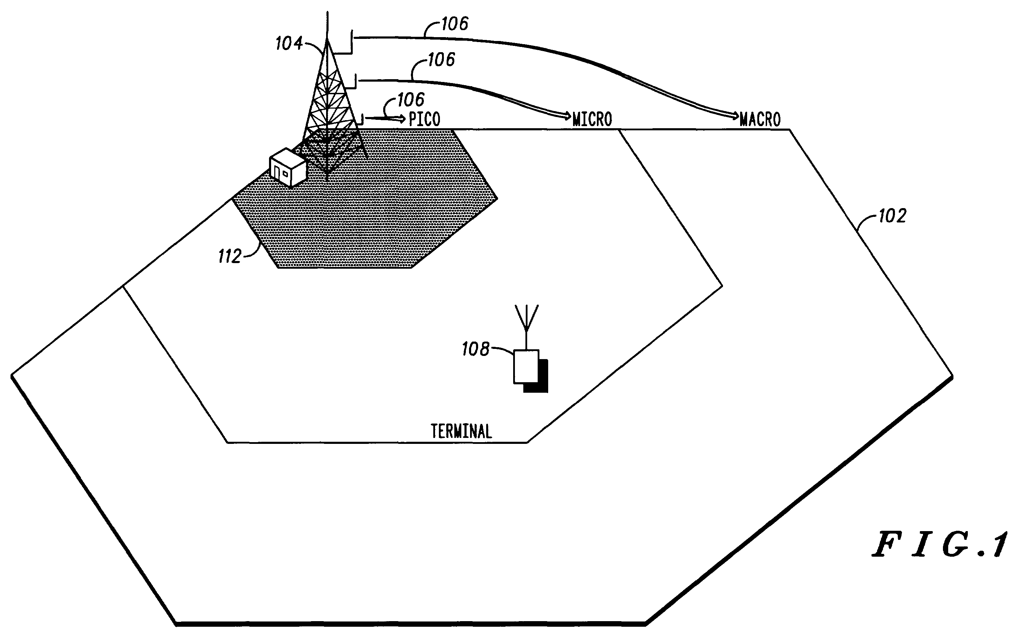

FIG. 1 is a schematic diagram of part of a telecommunications system for use with an embodiment of the present invention;
FIG. 2 is a schematic diagram of an apparatus constituting an embodiment of the present invention;
FIG. 3 is a schematic diagram of another apparatus for use with the apparatus of FIG. 1;
FIG. 4 is a schematic diagram of another apparatus for use with the apparatus of FIG. 1;

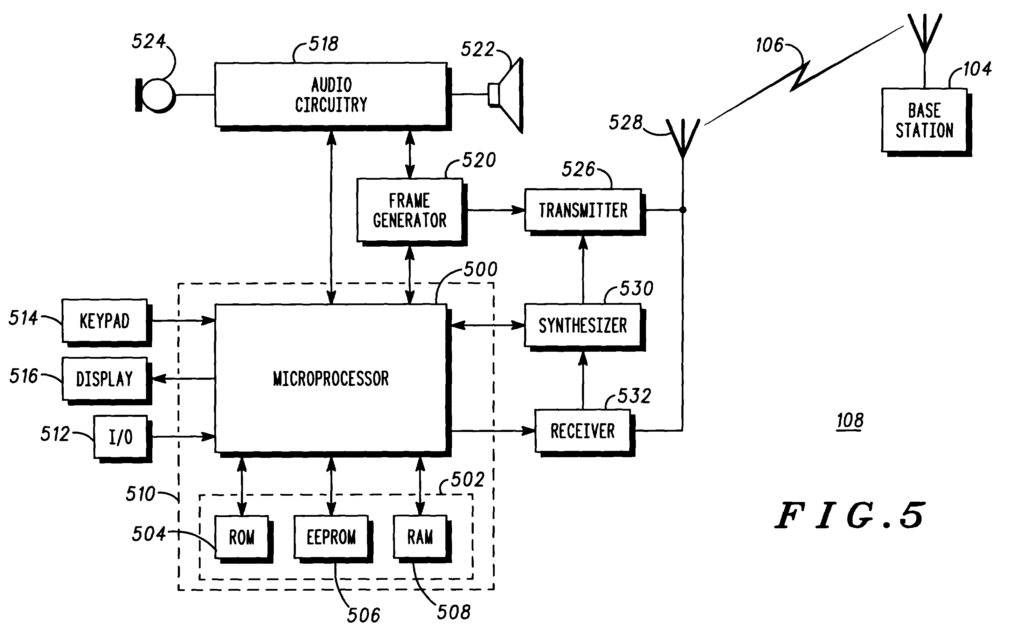

FIG. 5 is a schematic diagram of another apparatus for use with the apparatus of FIG. 1;
FIG. 6 is a schematic diagram of bandwidth allocation;
FIG. 7 is a schematic diagram of an alternative bandwidth allocation;
FIG.8 is a flow diagram of a method for use with the apparatus of FIGs. 1 to 5, and
FIG.9 is a flow diagram of a method fro use with the method of FIG.8.

### Description of a Preferred Embodiment

Throughout the description and drawings, like reference numerals shall be used to identify like parts.

A spread-spectrum radio communications system, for example, a Wideband-CDMA cellular telephone system employing both a TDD and an FDD scheme, is run by a system operator and supports a macrocell 102, and comprises a base station 104 in communication with a mobile terminal 108, for example, a cellular telephone, via a radio-frequency interface 106. Within the macrocell 102, there is a microcell 110, within which is a picocell 112. The microcell 110 and the picocell 112 are also supported by the base station 104.

Macrocells can provide communication services over large outdoor areas and some sub-urban districts where density of users is relatively low. In areas where the density of users is greater, the use of smaller cells is more appropriate. The cell size can firstly be reduced by use of microcells. If even smaller cells are needed, picocells can be used. In addition, to support high data rate applications, small cell sizes are required to provide a good signal to noise ratio. High data rate picocells are often used for indoor applications. Lower data rate macro and microcellular services are better suited to outdoor users although coverage generally extends indoors as well. In circumstances where a user is in the coverage of more than one cell type, the cellular telephone 108 generally chooses the cell providing the best signal quality. More sophisticated systems also consider factors such the velocity of the cellular telephone 108, since larger cells are more appropriate for a subscriber moving at a high velocity.

The base station 104 which supports the macrocell 110 can be an SC™ 614T base station manufactured by Motorola. For the purposes of simplicity and clarity of description, a portion of the base station 104 supporting the macrocell 110 is arranged to transmit and receive signals will be described. Of course, those skilled in the art will appreciate the existence of other components and functions in the base station 104, but will understand that their functionality does not relate to examples of the present invention and so need not be described.

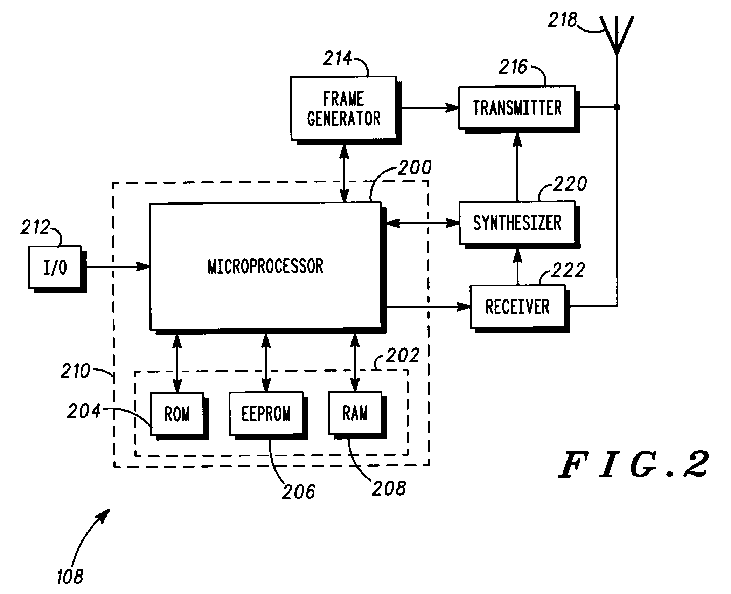

Referring to FIG. 2, the base station in the set of base stations 104 comprises a microprocessor 200 coupled to a memory 202, comprising a Read Only Memory (ROM) 204, an Erasable Electronic Programmable Read Only Memory (EEPROM) 206 and a Random Access Memory (RAM) 208. Preferably, the microprocessor 200, the ROM 204, the EEPROM 206 and the RAM 208 are consolidated into a single package 210 to execute steps necessary to generate the protocol and to perform other functions of each of the base station 104, such as managing input/output information via a connector 212.

The package 210 is connected to a frame generator 214. The frame generator 214 can be a Complementary Metal-Oxide Semiconductor (CMOS) Application Specific Integrated Circuit (ASIC) available from Motorola, Inc. The frame generator 214 is connected to a transmitter circuit 216.

The transmitter circuit 216 is connected to an antenna 218 and a frequency synthesiser 220, the synthesiser 220 being connected to the package 210 and a receiver circuit 222; the receiver circuit 222 is also connected to the antenna 218.

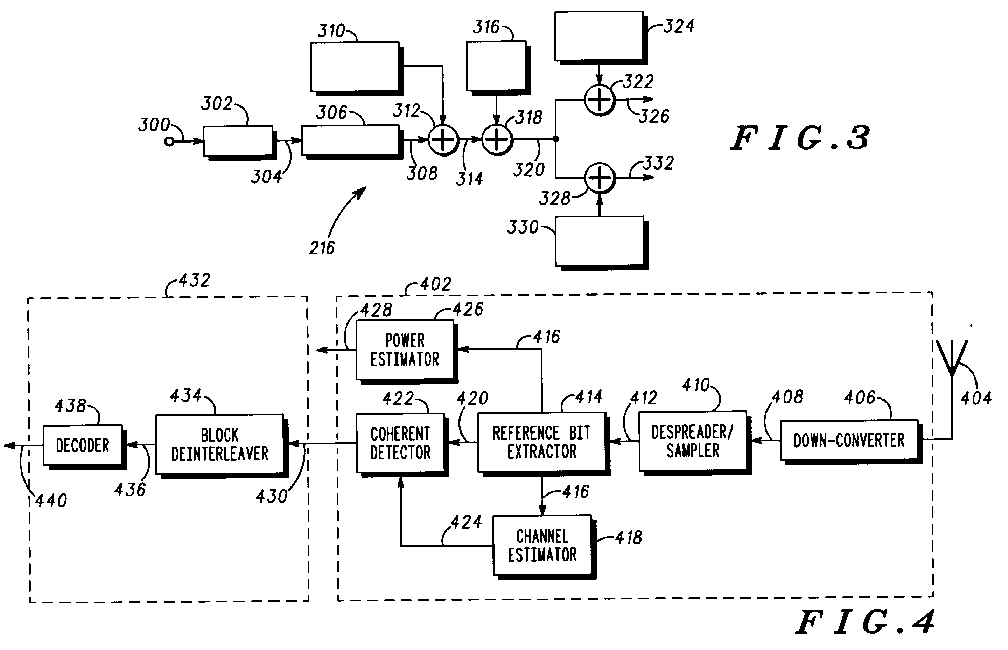

Referring to FIG. 3, the transmitter circuit 216 comprises an encoder 302 for receiving data bits 300 corresponding to a communication, for example, from a user to a subscriber using the mobile terminal 108. The data bits are received at a particular rate, for example, 9.6 kbps. The data bits can include either voice convened to data by a vocoder, pure data, or a combination of two types of data. The encoder 302 convolutionally encodes the data bits 300 into data symbols at a fixed encoding rate, for example, one data bit to two data symbols so that the encoder 302 outputs data symbols 304 at 19.2 ksym/s rate.

The data symbols 304 are then input into an interleaver 306. The interleaver 306 interleaves the data symbols 304. Interleaved data symbols 308 are output by the interleaver 306 at the same data symbol rate that they were input, for example, 19.2 ksym/s, to one input of an exclusive-OR combiner 312. Reference bits can be added in order to enable coherent detection in the receiver circuit 222.

A long pseudo-noise (PN) generator 310 is operatively coupled to the other input of the exclusive-OR combiner 312 to enhance the security of the communication by scrambling the interleaved data symbols 308. The long PN generator 310 uses a long PN sequence to generate a user specific scrambled sequence at a fixed chip rate, for example equal to the data symbol rate of the interleaved data symbols 308 which are input to the exclusive-OR combiner 312, for example, at a rate of 19.2 ksym/s. The scrambled data symbols 314 are output from the exclusive-OR combiner 312 at a fixed rate equal to the rate that the data symbols 308 are input to one input of the exclusive-OR combiner 318.

A long division channel selection generator 316 provides a particular predetermined length spreading (Walsh) code to an input of another exclusive-OR combiner 318. The code division channel selection generator 316 can provide one of 64 orthogonal codes corresponding to 64 Walsh codes from a 64 by 64 Hadamard matrix, wherein a Walsh code is a single row or column of the matrix. The exclusive-OR combiner 318 uses the particular Walsh code input by the code division channel generator 316 to spread the input scrambled data symbols 314 into Walsh code spread data symbols 320. The Walsh code spread data symbols 320 are output from the exclusive-OR combiner 318 at a fixed rate, for example, 1.2288 Mchips/s.

The Walsh code spread data symbols 320 are provided to an input of two exclusive-OR combiners 322, 328. A pair of short PN sequences, i.e. short when compared to the long PN sequence used by the long-PN generator 310, are generated by an I-channel PN generator 324 and a Q-channel PN generator 330. The I-channel and Q-channel PN generators 324, 330 can generate the same or different short PN sequences. The exclusive-OR combiners 322, 328 further spread the input Walsh code spread data 320 with the short PN sequence generated by the PN I-channel generator 324 and the PN Q-channel generator 330, respectively. The resulting I-channel code spread sequence 326 and Q-channel spread code sequence 332 are filtered and used to bi-phase modulate a quadrature pair of sinusoids (in order to generate a carrier signal) by driving the power level controls of a pair of sinusoids. The above described functionality can be provided by the microprocessor 200. The output signals of the sinusoids are summed, translated to an RF frequency, amplified and radiated by an antenna to complete transmission of the data bits 300 via a communication channel (not shown).

The receiver circuit 222 comprises a receiving portion 402 for receiving the transmitted spread-spectrum signal via the RF interface 106 through antenna 404. The received signal is down-converted by down-converter 406, producing a down-converted baseband signal 408. The down-converter 406 transforms the received spread-spectrum signal from the radio frequencies to baseband frequencies as well as other operation, for example, filtering and demodulating. The down-converted signal 408 is sampled into data samples by a despreader and sampler 410. The despreader and sampler 410 can be provided by the microprocessor 200 programmed in accordance with any technique known in the art.

The despreader and sampler 410 samples the received spread-spectrum signal by sampling at a predetermined rate, for example, 1.2288 Megasamples/second. Subsequently, the sampled signal is despread by correlating the received sampled signals with a long spreading code formed by combining the long PN sequence, the Walsh code and the short PN sequence. As the despreading operation is well known in the art, it will not be described further in order to maintain simplicity and clarity of description.

The resulting despread sampled signal is further sampled at a predetermined rate, producing a further sample despread signal 412, and output to a reference bit extractor 414, for example, 307.2 kilosamples/second so that a sequence of four samples of the received spreadspectrum signal is despread and/or represented by a single data sample.

The reference bit extractor 414 extracts reference bits 416 from the despread sampled signal 412 and outputs the reference bits 416 to a channel estimator 418. The remaining data samples 420 from the despread sampled signal 412 are output to a coherent detector 422.

The channel estimator 418 correlates the extracted reference bits 416 with a known reference sequence of data samples to obtain unbiased, but noisy, channel estimates. In order to obtain a better channel estimate 424, these noisy estimates may be passed through a low-pass filter, which may be fixed or adaptive, to remove the high frequency noise components. The resulting channel estimates 424 are relatively noise-free and can be used for coherent detection of the symbols.

Power control can also be used to enhance overall performance of the system. The power control algorithm may be very similar to the algorithms used in non-coherent communication systems. In this example, the power control algorithm includes estimating received power every 1.25 ms. The power estimates can be calculated with several different techniques. One technique is to compute a channel estimate with a power estimator 426 by using simply the six reference signal samples, ie. reference bits 416 from reference bit extractor 414 in a 42 bit length block. The square of the magnitude of the channel estimate is then output by the power estimator 426 as the power estimate 428.

The coherent detector 422 multiplies the remaining data samples 420 from the despread sampled signal 412 by the conjugate of the channel estimates 424 to generate coherently detected samples 430.

The data samples 430, which form soft decision data, are then input into a decoding portion 432 including a deinterleaver 434 which deinterleaves the data samples 430. In the deinterleaver 434, the soft decision data 430 are individually input into a matrix which defines a predetermined size block of soft decision data. The soft decision data are input into locations within the matrix so that the matrix is filled in a row by row manner, producing deinterleaved soft decision data 436. The deinterleaved soft decision data 436 are individually output from locations within the matrix so that the matrix is emptied in a column by column manner. The deinterleaved soft decision data 436 are output by the deinterleaver 434 at the same rate that they were input, for example, 28.8 kbits/s.

The predetermined size of the block of soft decision data defined by the matrix is derived from the maximum rate of sampling data samples from the spread-spectrum signal received within a predetermined length transmission block.

The deinterleaved soft decision data 436 are input to a decoder 438 which uses maximum likelihood decoding techniques to generate estimated traffic channel data bits 440. The maximum likelihood decoding techniques can be augmented by using an algorithm which is substantially similar to a Viterbi decoding algorithm.

The above described functionality can be provided by the microprocessor 200.

Similar apparatus as described above is employed in order to support the microcell and the picocell, each having independent transmit and receive electronics which is coupled to a base station controller along with the transmit and receive electronics of the macrocell.

The cellular telephone 108 can be a StarTAC® cellular telephone manufactured by Motorola, Inc., adapted so as to have the following features and operates in the following manner.

The cellular telephone 108 comprises a microprocessor 500 coupled to a memory 502, comprising a Read Only Memory (ROM) 504, an Erasable Electronic Programmable Read Only Memory (EEPROM) 506 and a Random Access Memory (RAM) 508. Preferably, the microprocessor 500, the ROM 504, the EEPROM 506 and the RAM 508 are consolidated into a single package 510 to execute steps necessary to generate the protocol and to perform other functions of the cellular telephone 108, such as managing input/output information via a connector 512. The package 510 is connected to and is also arranged to manage input/output information via a keypad 514 and a display 516.

The package 510 is connected to audio circuitry 518 directly and via a frame generator 520. The frame generator 520 can be a Complementary Metal-Oxide Semiconductor (CMOS) Application Specific Integrated Circuit (ASIC) available from Motorola, Inc. The frame generator 520 is connected to a transmitter circuit 526. The audio circuitry 518 is connected to a loudspeaker 522 and a microphone 524.

The transmitter circuit 526 is connected to an antenna array 528 and a frequency synthesiser 530, the synthesiser 530 being connected to the package 510 and a receiver circuit 532; the receiver circuit 532 is also connected to the antenna array 528.

Transmission and receipt of communications by the cellular telephone 108 is provided in an identical manner to that described in relation to FIGs. 3 and 4.

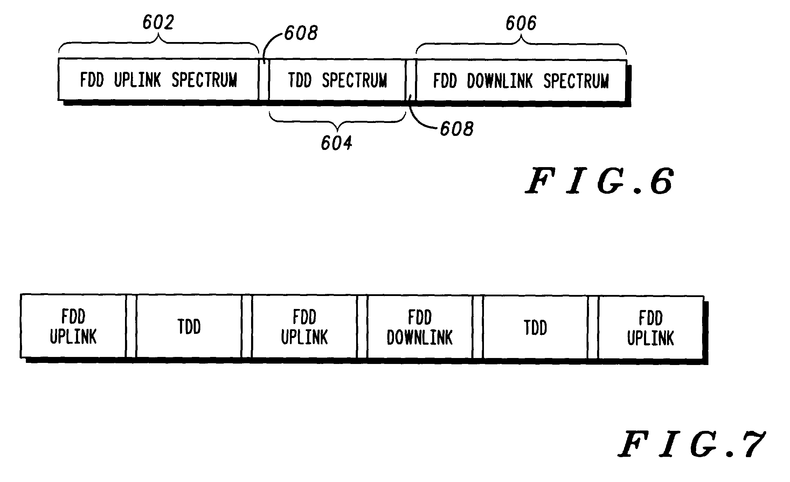

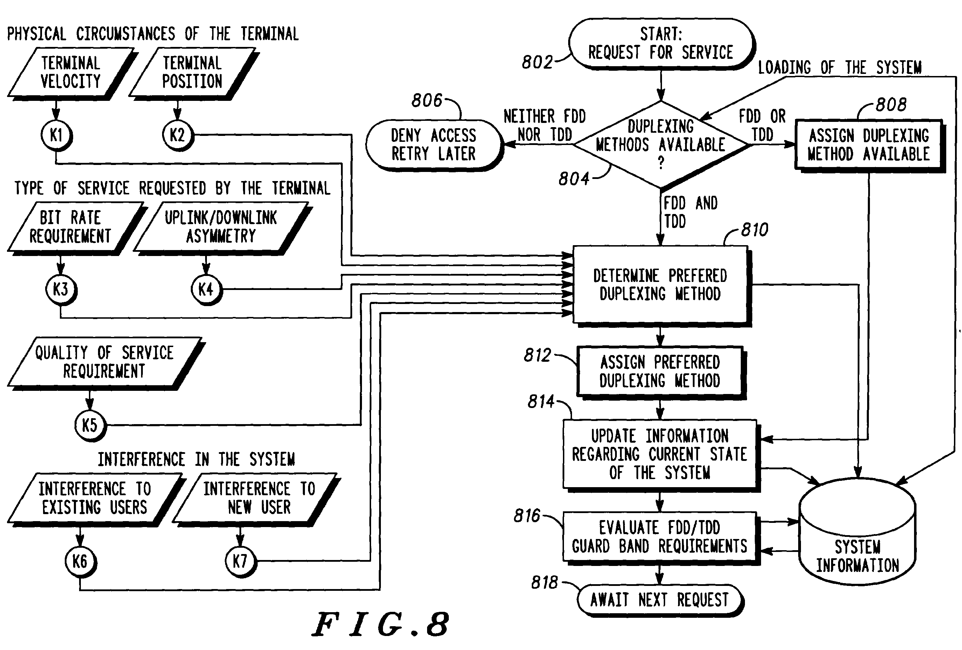

Referring to FIG. 6, the system operator is allocated a predetermined range of bandwidth X MHz to Y MHz, for example, 1910 MHz to 1960 MHz (in the case of a contiguous band) or 1910 MHz to 1940 MHz and 2110 MHz to 2130MHz (in the case of a non-contiguous band). In order to support, both FDD and TDD schemes, the range of bandwidth is subdivided into three portions. A first portion 602 is allocated for use in uplink transmissions of the FDD scheme, a second portion 604 is allocated for the TDD scheme, and a third portion 606 is allocated for use in downlink transmissions of the FDD scheme. Of course, the range of bandwidths can be subdivided into more than three portions, the portion being allocated for FDD uplink/downlink transmissions (more than two portions can be allocated for this) and TDD communications (see FIG. 7).

The above described portion occupy subranges of the predetermined range of bandwidth, the size of which can vary according to system requirements, for example, 10 MHz for a TDD scheme and 20 MHz for an uplink subrange and 20 MHz for a downlink subrange in an FDD scheme. By varying the size of the subranges of the predetermined range of bandwidth, it is possible to increase system capacity, for example, allocation to the FDD scheme can be overloaded, whilst at the same time, the TDD scheme can be substantially unused. In such a situation, it is beneficial to increase the size of the subrange relating to the FDD scheme at the expense of reducing the size of the subrange relating to the TDD scheme. In another exemplary situation, downlink traffic can he greater than uplink traffic, such as in the case of data downloading. In this case, it is beneficial to increase the size of the subrange relating to downlink transmissions of the FDD scheme at the expense of decreasing the size of the subrange relating to the uplink transmissions of the FDD scheme and/or the subrange relating to the TDD scheme.

Between the subranges of the predetermined range of bandwidth are guard bands 608. The positioning and size of the guard bands 608 between the subranges of the predetermined range of bandwidth is known as the "guard band requirement".

The most appropriate duplexing scheme and, in some cases, the most appropriate cell, i.e. macro, micro, pico cell, for a given communication is allocated based upon certain factors relating to spectral use of the system, for example, bit rate requirements of the given communication; a high bit rate requirement favours small cells, such as mico and pico cells. If data traffic is unsymmetric, a favourable scheme to use is the TDD scheme. If the cellular telephone 108 is travelling at high velocity ,for example, 100 kph, a large cell, such as a macrocell is allocated, since the number of handovers is reduced. The type of cells available and the type of duplexing schemes available are considered as well.

During normal operation, the cellular telephone 108 is in a stand-by mode until the subscriber makes or receives a call. In the case of making the call, the microprocessor 500 of the cellular telephone 108 determines the characteristics of the service being requested, for example, the bit rate of a communication and/or any asymmetry expected between uplink and downlink communications and/or the quality of service required. The asymmetry expected and the bit rate required by the cellular telephone 108 can be determined from an application to be carried out by the cellular telephone 108; throughout the call, the asymmetry and the bit rate can be measured by either the cellular telephone 108 or the infrastructure of the system.

In addition, circumstances of the mobile terminal 108 can also be determined by the microprocessor 500, for example, the velocity and position of the cellular telephone 108. The circumstances of the cellular telephone 108 can also be determined, in full or in part, by the base station 104.

Once determined, the cellular telephone 108 transmits the characteristics of the service requested, the circumstances of the cellular telephone 108 and the request for service to the base station 104.

Referring to FIG. 8, the base station 104 receives the request for service (step 802) and determines whether both FDD and TDD schemes are available by analysing a system database which contains data relating to cellular telephones and duplexing schemes allocated thereto. If neither FDD nor TDD schemes are available, access to the system is denied to the cellular telephone 108 (step 806). If only the TDD or FDD scheme is available, the available duplexing scheme is assigned to the cellular telephone 108 (step 808). The state of the system is then updates (step 814) by updating the system database to reflect the fact that the cellular telephone 108 has been allocated either the FDD or TDD scheme. Guard band requirements in order to support the current subscribers using the system is then evaluated (step 816), the size of the subranges of the predetermined range of bandwidth is evaluated, for example, by selecting a value corresponding to an acceptable level of interference in order to determine the guard band size (a low level of interference requiring a larger guard band size), and selecting the size of the subranges based upon user demand.

If both TDD and FDD schemes are available, the microprocessor 200 of the base station 104 determines (step 810) a preferred duplexing scheme to be used by the cellular telephone 108. The preferred duplexing scheme is determined (step 810) based upon, inter alia, the circumstances of the cellular telephone 108 and the characteristics of the cellular telephone 108 received by the base station 104 from the cellular telephone 108 with the request for service. In addition, characteristics relating to interference in the system can be used in order to identify the preferred duplexing scheme. The characteristics relating to interference can be calculated by the base station 104, for example, interference to existing users and/or interference to new users. In order to calculate the characteristics relating to interference, interaction between new and existing users can be estimated. Also, levels of interference which vary as a result of the duplexing scheme and the cell type used are also considered.

The values relating to the velocity of the terminal, the position of the terminal, the bit rate required, the asymmetry of uplink/downlink communications, the quality of service required, interference to existing users and/or interference to new users are each multiplied by a respective weighting value K₁, K₂, K₃, K₄, K₅, K₆, and K₇.

An example of how weighted values corresponding to the velocity and position of the cellular telephone 108 are derived and used is described below.

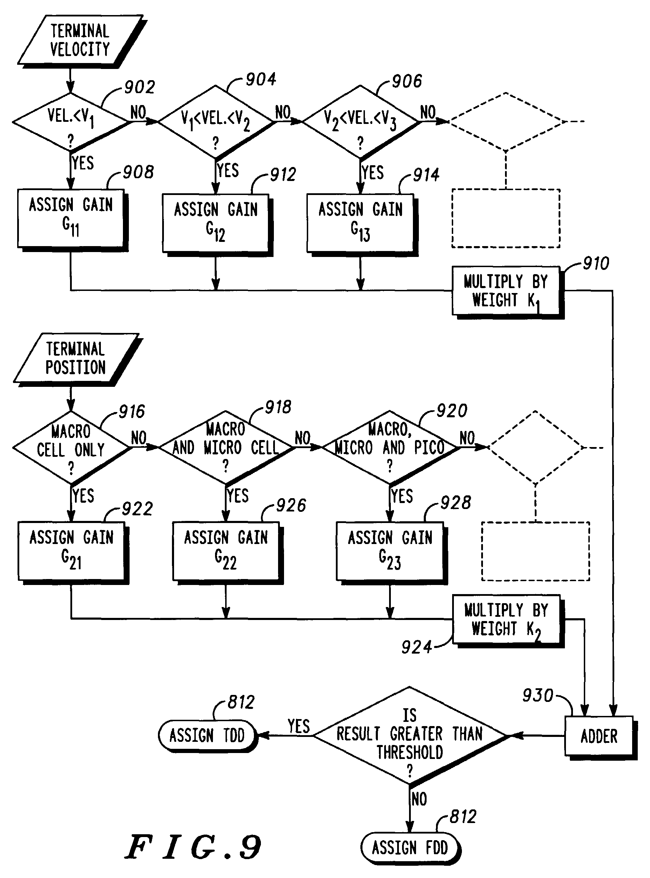

Referring to FIG. 9, the velocity, Vel, of the cellular telephone 108 is analysed to determine whether the cellular telephone 108 is travelling at:
1. a velocity which is less than a first predetermined velocity, V₁ (step 902);
2. a velocity which is between the first predetermined velocity, V₁, and a second predetermined velocity, V₂ (step 904);
3. a velocity which is between the second predetermined velocity, V₂, and a third predetermined velocity, V₃ (step 906).

Other, higher velocity ranges, or smaller velocity ranges can be tested.

If Vel is less than V₁, a first gain value G₁₁ is assigned (step 908) to the cellular telephone 108 and multiplied by the first weighting value K₁ (step 910). Similarly, if Vel is between V₁ and V₂, a second gain value G₁₂ is assigned (step 912) to the cellular telephone 108 and multiplied by the first weighting value K₁ (step 910). If Vel is between V₂ and V₃, a third gain value G₁₃ is assigned (step 914) to the cellular telephone 108 and multiplied by the first weighting value K₁ (step 910).

The location of the cellular telephone 108 is also analysed to determine whether the cellular telephone 108 is:
1. In a macrocell only (step 916);
2. in a macrocell and a microcell (step 918), or
3. in a macrocell, microcell and picocell (step 920).

Other locations, for example, whether or not the cellular telephone 108 is located within a macro and picocell only, can be tested.

If the cellular telephone 108 is located within the macrocell only, a fourth gain value G₂₁ is allocated (step 922) to the cellular telephone 108 and multiplied by the second weighting value K₂ (step 924). If the cellular telephone 108 is located within a macrocell and a picocell, a fifth gain value G₂₂ is allocated (step 926) to the cellular telephone 108 and multiplied by the second weighting value K₂ (step 924). If the cellular telephone 108 is located within a macrocell, a microcell and a picocell, a sixth gain value G₂₃ is allocated (step 928) to the cellular telephone 108 and multiplied by the second weighting value K₂ (step 924).

Once calculated, the weighted values (those multiplied by the weighting values K₁ and K₂) are summed (step 930) and the microprocessor 500 determines whether the summed value exceed a predetermined threshold (step 932), the result of which determines whether the TDD scheme or the FDD scheme is allocated (step 812) to the cellular telephone 108.

Although not described (to maintain clarity), weighted values can be calculated in a similar manner to that described above in relation to other factors which would influence a choice of duplexing scheme.

Gain values G₁₁, G₁₂, G₁₃, G₂₁, G₂₂, G₂₃ are constants whose values are predetermined by a system operator, either through simulation or empirically.

Once the preferred duplexing scheme has been determined (step 810), it is assigned to the cellular telephone 108. The system then updates (step 814) the system database to indicate the duplexing scheme allocated to the cellular telephone 108. Guard band requirements of the system are then evaluated, which are used to update the system database.

The base station 104 then awaits a next request for service (step 818). Once the next request for service has been received, the above described process is re-initiated (step 802).

Although the above example has been described in the context of allocating duplexing schemes when service is requested, it should be appreciated that duplexing schemes can be allocated throughout a period when the cellular telephone 108 is active, i.e. when service is being provided, so that as factors relating the optimum choice of duplexing scheme change due to activity of the subscriber, the cellular telephone 108 can change duplexing scheme.

## Claims

1. A method for allocating resources to a terminal in a communications system, the system arranged to support a first duplexing scheme and a second duplexing scheme, the method comprising the step of:
allocating one of the first or second duplexing schemes to the terminal in response to at least one criteria relating to the spectral use of the system so as to optimise the spectral efficient use of the system by the terminal.

2. A method as claimed in Claim 1, wherein the at least one criteria relating to the spectral use is associated with a type of service requested by the terminal.

3. A method as claimed in Claim 1, wherein the at least one criteria relating to the spectral use is associated with a physical circumstance of the terminal.

4. A method as claimed in Claim 1, wherein the at least one criteria relating to the spectral use is loading of the system.

5. A method as claimed in Claim 1, wherein the at least one criteria relating to the spectral use is associated with interference in the system.

6. A method as claimed in Claim 2, wherein the at least one criteria relating to the spectral use associated with a type of service requested by the terminal is bit rate.

7. A method as claimed in Claim 2, wherein the at least one criteria relating to the spectral use associated with a type of service requested by the terminal is information symmetry.

8. A method as claimed in Claim 2, wherein the at least one criteria relating to the spectral use associated with a type of service requested by the terminal is a quality of service required.

9. A method as claimed in Claim 3, wherein the at least one criteria relating to the spectral use associated with a physical circumstance of the terminal is the location of the terminal.

10. A method as claimed in Claim 3, wherein the at least one criteria relating to the spectral use associated with a physical circumstance of the terminal is the velocity of the terminal.

11. A method as claimed in Claim 5, further comprising at least one other terminal in the system, wherein the at least one criteria relating to the spectral use associated with interference in the system is potential interference to the at least one other terminal in the system.

12. A method as claimed in Claim 5, further comprising at least one other terminal in the system, wherein the at least one criteria relating to the spectral use associated with interference in the system is potential interference to the terminal from the at least one other terminal.

13. A method as claimed in any one of the preceding claims, further comprising a frequency allocation scheme comprising a first band of frequencies and a second band of frequencies, the first band of frequencies corresponding to at least a first link of a first duplexing scheme, wherein a portion of the second band of frequencies is dynamically allocated for use by the at least first link.

14. A method as claimed in claim 13, wherein the second band of frequencies correspond to a second link of the first duplexing scheme.

15. A method as claimed in claim 13, wherein the second band of frequencies correspond to at least one link of a second duplexing scheme.

16. A method as claimed in claim 13, further comprising a third band of frequencies corresponding to at least a second link of the first duplexing scheme.

17. A method as claimed in any one of the preceding claims, wherein the first duplexing scheme is a frequency division duplexing scheme.

18. A method as claimed in any one of the preceding claims, wherein the first duplexing scheme is a time division duplexing scheme.

19. A frequency allocation scheme comprising a first band of frequencies and a second band of frequencies, the first band of frequencies corresponding to at least a first link of a first duplexing scheme, wherein a portion of the second band of frequencies is dynamically allocated for use by the at least the first link.

20. A method as claimed in claim 19, wherein the second band of frequencies correspond to a second link of the first duplexing scheme.

21. A method as claimed in claim 19, wherein the second band of frequencies correspond to at least one link of a second duplexing scheme.

22. A method as claimed in claim 19, further comprising a third band of frequencies corresponding to at least a second link of the first duplexing scheme.
